# EUROPEAN PATENT APPLICATION

(11) **EP 3 078 858 A1**
(43) Date of publication of application: **12.10.2016**
(21) Application number: 15000979.3
(22) Date of filing: 07.04.2015
(51) Int. Cl.: F04C 18/344

(54) **COMPACT, HIGHLY INTEGRATED, OIL LUBRICATED ELECTRIC VACUUM COMPRESSOR**

(71) Applicant: WABCO Europe BVBA, 1160 Brussels (BE)
(72) Inventor: Burn, Richard, Newsome, Huddersfield HD4 6RN (GB); Warner, Simon, Pontefract, West Yorkshire WF8 1HG (GB)
(74) Representative: Rabe, Dirk-Heinrich

(57) **Abstract**

The invention relates to an electrically driven positive displacement compressor, in particular vacuum pump (1), comprising an electric drive motor (9) for driving the compressor, a working chamber (32) having an inlet (78) and an outlet (76), wherein the electric drive motor (9) comprises a ring shaped electric stator (12) and an electric rotor (16) arranged inside the ring shaped electric stator (12) and defining a cavity (24) within the electric rotor (16), and wherein the working chamber (32) is arranged at least partially inside the cavity (24) of the electric rotor (16). According to the invention a compressor rotor (36) is arranged inside the working chamber (32) and coupled to the electric rotor (16).

## Description

The invention relates to an electrically driven positive displacement compressor, in particular a vacuum pump, and a vehicle.

Such compressors, in particular vacuum pumps, may be fitted to road vehicles with gasoline or diesel engines, as well as hybrid and electrical motors. Typically, in the past and with combustion engine vehicles still today, vacuum pumps have been driven by a camshaft of the engine. In general, such a vacuum pump for example is disclosed in WO 2007/116216 A1 in the name of the present Applicant. The disclosed vacuum pump comprises a casing defining a working chamber which is provided with an inlet and an outlet and a movable member is provided in the working chamber, which is movable to draw fluid into the chamber through the inlet and out of the chamber through the outlet so as to induce a reduction in pressure at the inlet. The inlet is connectable to a consumer such as a brake booster or the like. The outlet normally is connected to the engine's crank case, in case a combustion engine is used and the compressor is used in the mode of a vacuum pump. In case the device is used in the compressor mode, the outlet, which provides fluid with an increased pressure, may be used for other applications, such as pneumatic engines.

Nowadays, the electrification of road vehicles increases, so that it becomes necessary to drive the vacuum pump by a separate electric drive motor, instead of coupling the vacuum pump directly to the camshaft of the engine.

It is known to mount an electric drive motor with a vacuum pump of the aforementioned known type, for driving the vacuum pump. Typically, the electric drive motor is coupled to the vacuum pump in an axially adjacent manner, such that a drive shaft of the vacuum pump may be coupled directly or indirectly to an output shaft of the electric drive motor.

The drawback of such solutions is that the dimension of a respective vacuum pump in the axial direction is relatively large, which may result in problems when mounting such a device in the engine's area of a road vehicle where the mounting space typically is very limited.

It has been proposed in WO 2012/007125 A2 to integrate a vacuum vane pump with an electric drive motor. The vacuum pump disclosed in WO 2012/007125 A1 comprises a ring shaped electric rotor carrying a plurality of magnets and a plurality of slidable vanes. The electric rotor defines in it's inside, the working chamber of the vacuum pump. The rotor is provided radially inside a ring shaped electric stator. Inside the working chamber, a pump stator in form of a cylindrical shaft is provided. The pump stator axis is offset to the rotor axis of the electric rotor and the slot between the stator and the rotor is used as the working chamber of the vacuum pump. The vanes, which are carried by the electric rotor intersect the working chamber in radial direction for defining working zones and contact the outer surface of the stator for moving fluid from the inlet to the outlet. A biasing member is provided engaging the radially outer tips of the vanes for biasing the vanes with a predetermined force towards the outer surface of the stator so that a contact between the outer surface of the stator and the vanes is ensured. The rotor of the electric motor and the rotor of the vane pump in this case are the same elements. Thus, the inner surface of a rotor defines the outer surface of the working chamber.

Even though, the axial length of the whole device can be reduced with such an arrangement due to the integration of the electric rotor and the rotor of the vane pump, however, such an arrangement can only be used with multiple vanes, which move along the outer surface of the inner pump stator. Furthermore, such an arrangement faces sealing issues, since the ring shaped rotor needs to be sealed against a casing so that vacuum may be induced effectively at the inlet of the vacuum pump.

Therefore, it is an objective of the present invention to provide an electrically driven positive displacement compressor, in particular a vacuum pump, of the aforementioned type which is improved with respect to sealing and may be used with a wider variety and/or flexibility in the design of the working chamber, while keeping the axial length of the vacuum pump as small as possible.

According to the first aspect of the invention the problem is solved by an electrically driven positive displacement compressor, in particular, a vacuum pump, according to claim 1.

The invention starts from an electrically driven positive displacement compressor, in particular a vacuum pump, of the aforementioned type, comprising an electric drive motor for driving the compressor, a working chamber having an inlet and an outlet, wherein the electric drive motor comprises a ring shaped electric stator and an electric rotor arranged inside the ring shaped electric stator and defining a cavity within the electric rotor, and wherein the working chamber is arranged at least partially inside the cavity of the electric rotor. According to the invention, a compressor rotor is arranged inside the working chamber and coupled to the electric rotor.

The invention is based on the general idea of integration of electric motor and a compressor, in particular a vacuum pump. When the electric rotor is arranged inside the ring shaped electric stator and defines a cavity, it is possible to arrange the working chamber of the compressor inside this cavity for reducing the axial length of the compressor. At the same time, it is beneficial to use a compressor rotor inside the working chamber, which may be coupled with an movable impeller element, for moving the fluid through the working chamber. Due to this arrangement, only the compressor rotor needs to be sealed against the working chamber and there is no need to seal a ring shaped compressor rotor over its entire circumferential length. Furthermore, the working chamber can be designed more freely inside the cavity of the electric rotor in particular, virtually independent of the design of the electric rotor.

When the following reference is made to a vacuum pump, it shall be understood that this also refers to a compressor and vice versa. If only one of the terms is used, this is only due to simplification.

These and further developed configurations of the invention are further outlined in the dependent claims. Thereby, the mentioned advantages of the proposed concept are even more improved. For each feature of the dependent claims it is claimed independent protection independent from all other features of this disclosure.

According to a first preferred embodiment of the invention, the electric drive motor is formed as a brushless motor. Due to this embodiment, the maintenance of the compressor is simplified and also the efficiency may be improved. Since brushes are omitted, wear at the brushes is also omitted. Preferably, the brushless electric motor is a DC motor. This is a particular preferred solution, when the compressor is used in a road vehicle and connected to the electrical system of the road vehicle. Vehicle electrical systems typically provide direct current with limited voltage, so that a brushless DC motor is preferred. Brushless DC motors can be made with relatively large diameter and short axial dimensions. This results in a higher torque and lower rotational speed that is well suited to the characteristics of a positive displacement compressor, in particular vacuum pump. By implementing this Brushless DC motor such that the electric rotor is arranged radially inside the stator, there becomes available a space in the centre of the electric rotor which is not required magnetically. This space can instead be used to house a compact compressor or vacuum pump mechanism. The resultant solution may use the compressor or vacuum pump rotor to mount the electric rotor, and so typically eliminates at least one bearing and the conventional coupling between motor and compressor. Overall axial length of the device is reduced to an absolute minimum.

Furthermore, it is preferred that the compressor comprises a chamber casing, defining in it's inside the working chamber, wherein the chamber casing is arranged at least partially inside the ring shaped electric rotor. The chamber casing defines the geometry of the working chamber and has a smaller diameter than the inner diameter of the electric rotor, so that it can fit inside the cavity inside the electric rotor. The chamber casing preferably is static so that the electric rotor rotates around an outside portion of the chamber casing. Preferably, at least one third of an axial length of the chamber casing is arranged inside the cavity of the electric rotor, much more preferred about the half of the axial length, even more preferred the whole axial length of the chamber casing is arranged inside the cavity of the electric rotor. This specific arrangement is also dependent on how the electric motor is designed, in particular dependent on an axial dimension of the electric motor. Due to this arrangement, an axial integration of the compressor is further obtained, resulting in a shorter overall axial length of the compressor.

It is preferred that the chamber casing is formed of a non-ferromagnetic material, in particular aluminium. This is particularly preferred when a brushless DC motor is used. When the chamber casing is formed of a non-ferromagnetic material the influence of the chamber casing on the magnetic field of the electric motor is reduced, resulting in an increased efficiency and a smooth running of the whole compressor. Furthermore, using aluminium, also the weight of the compressor may be reduced. There are also further alternative materials available which can be used, for example other non-ferromagnetic materials such as titanium or also plastic materials are preferred and can be used in a beneficial way, depending on the specific application.

Furthermore, it is preferred that the chamber casing comprises a cover, for closing the working chamber. The cover preferably is releasably fixed to the chamber casing for providing access to the chamber casing when this is necessary. The cover preferably is formed of the same material as the chamber casing. Thus, the cover also is preferably formed of a non-ferromagnetic material, in particular aluminium. In an embodiment, the inlet and the outlet of the compressor are provided in the cover. Alternatively, inlet and outlet are provided in the chamber casing itself. Providing the inlet and the outlet in the cover, may lead to an even more reduced axial length, since the chamber casing can be arranged to a greater extent inside a cavity formed in the electric rotor.

According to a further preferred embodiment, the rotor engages at least one vane inside the working chamber for rotating the at least one vane to draw fluid into the working chamber through the inlet and out of the working chamber through the outlet. Due to this movement, a reduction in pressure at the inlet is induced and/or an increase in the pressure at the outlet is induced. Preferably, two or more vanes, more preferably four or more vanes are provided. Each vane may be movable in a radial direction of a rotor and may be biased by means of a biasing means, for example a spring or the like against the rotor so that each vane intersects the working chamber from the rotor to an inner wall of a casing of the working chamber for defining working zones.

In a particular preferred embodiment the at least one vane is formed as a single mono vane being slidable provided in a slot formed in the compressor rotor. Such a compressor may be referred as a single vane compressor or vacuum pump. The working chamber in such an embodiment may have a substantially cylindrical inner wall and the mono vane has a length which corresponds to a diameter of the working chamber. The compressor rotor has a slot in which the vane is seated, the slot being preferably formed in a radial direction of the compressor rotor. For increasing the efficiency, a lubrication means may be provided at the compressor rotor for lubricating the vane in the slot. Such arrangement is very simple and biasing means for biasing the single vanes can be omitted in this embodiment.

Furthermore, it is preferred that the compressor chamber comprises a central axis and the electric rotor comprises a rotational axis, wherein the central axis of the working chamber is offset to the rotational axis of the electric rotor. The fact that the compressor chamber comprises a central axis does not necessarily imply that it is circular in cross section. Much more also non-circular cross section are preferred, as e.g. e.g. ellipsoid, cardioid or any other epicycloid form. For inducing a vacuum at the inlet and/or inducing increased pressure at the outlet of the working chamber, it is necessary to form increasing or decreasing working zones within the working chamber for compressing or depressing the fluid in such working zones. Due to this asymmetric arrangement, where the central axis of the working chamber is offset to the rotational axis of the electric rotor, the working zones can be formed in an efficient and simple way.

Furthermore, it is preferred that the rotational axis of the compressor rotor is arranged coaxial to a rotational axis of the electric rotor. Since the compressor rotor is coupled to the electric rotor for rotating the compressor rotor, this arrangement provides a simple transmission of the rotational movement of the electric rotor to the compressor rotor. A transmission between the axis is not necessary and the compressor rotor can be arranged coaxially within the electric rotor and thus within the electric motor in total. This makes it also possible to form the compressor rotor out of a ferromagnetic material, such as steel, which may positively influence the magnetic field within the electric motor, increasing the overall efficiency of the compressor or vacuum pump.

According to a further preferred embodiment, the compressor rotor and the electric rotor are fixedly connected to each other. In particular, when the compressor rotor and the electric rotor are arranged coaxially to each other, this embodiment is preferred. In a particular preferred embodiment, the compressor rotor and the electric rotor are fixed together by means of a press fit. A press fit provides reliable mounting of these two parts without the need of additional elements, resulting in reduced manufacturing costs and reduced maintenance. Alternatively, the compressor rotor and the electric rotor may be formed as a one-piece.

In a further preferred embodiment, the electric rotor is substantially in the form of a cup having a radial ring shaped wall and a bottom wall extending radially there from towards the rotational axis for engaging the compressor rotor. Both, the radial ring shaped side wall and the bottom wall may or may not be solid. For example, the radial side wall may be formed of a solid material and having a substantially hollow cylindrical form, and the bottom wall may be formed as radially extending arms connecting the side wall with the compressor rotor. Preferably, the electric rotor is formed as a one-piece, for example as a deep-drawn part. The bottom wall acts as a connecting mechanism between the compressor rotor and the radial shaped side wall, which preferably carries a plurality of permanent magnets for the electric motor. Due to the cup shaped form, the radial ring shaped side wall of the electric rotor can extend in an axial direction over the working chamber and thus over the chamber casing, so that the axial length of the compressor can be reduced.

Furthermore, it is preferred that the compressor rotor comprises a shaft, the shaft being received in at least one bearing formed in the chamber casing and extending therethrough for engaging the electric rotor. By means of such a shaft, the rotor can easily be connected to the electric rotor and furthermore, the compressor rotor can easily be supported on the chamber casing by means of the shaft. Preferably, the shaft also is received in a bearing formed in the cover. Thus, the compressor rotor is supported in two opposite bearings, leading to a great stability when in operation. When the shaft of the compressor rotor extents to the chamber casing for engaging the electric rotor, it is preferred that suitable sealing means are provided between the chamber casing and the shaft. For example, an O-ring or a radial shaft seal can be provided. When the shaft is additionally received in a bearing formed in the cover, there is no need that the shaft also intersects the cover. Much more an axial front side end of the shaft may also be received in the cover, so that additional sealing is not required.

It is preferred that the bearing is formed as a sleeve bearing. A sleeve bearing provides beside the bearing effect also to some extent a sealing effect, so that such a bearing is preferred. Furthermore, a sleeve bearing is simple to manufacture. Preferably, an adequate oil lubrication system is provided in the chamber casing for feeding the sleeve bearing with oil. An oil gallery may be provided surrounding the shaft in the area of the sleeve bearing so that sufficient lubrication of the sleeve bearing is ensured. Alternatively, also roller bearings may be used, which however are more difficult to seal against gas passing therethrough.

According to a further preferred embodiment, the compressor comprises a housing for housing the drive motor and the chamber casing, wherein the chamber casing is mounted to the housing. The housing in particular receives the stator of the electric motor and supports the stator. The chamber casing is fixed to the housing by means of adequate mounting means, for example of the screw and screw threaded bore type. Therefore, the chamber casing and the stator are in a defined relationship to each other. Since the compressor rotor is in a defined relation to the chamber casing and the electric rotor is engaged to the compressor rotor, also the electric rotor is in a defined relationship to the electric stator, so that a smooth operation and efficient operation of the compressor or vacuum pump is possible.

Furthermore, it is preferred that the electric stator comprises a stator winding and the electric rotor comprises a plurality of permanent magnets. The permanent magnets are preferably arranged in a ring shape around the rotor and fixedly connected to the rotor. The permanent magnets are preferably alternatingly poled for forming the electric rotor of the electric motor. Such a design is a simple way of providing a brushless DC motor.

According to a particularly preferred embodiment of the invention, the compressor is executed as a vacuum pump to generate a vacuum pressure for a braking system of a vehicle. Using the compressor as a vacuum pump for generating or inducing a vacuum pressure at the inlet of the compressor is preferred since the above described benefits of the compressor become notably apparent. The braking system is preferably connected with the inlet of the compressor, which in this embodiment is used as a vacuum pump, for providing the braking system with a vacuum source.

In a second aspect of the invention, the problem stated in the introductory portion is solved with a vehicle comprising a compressor according to at least one of the aforementioned preferred embodiments of a compressor according to the first aspect of the invention. It shall be understood that the compressor of the first aspect of the invention and the vehicle of the second aspect of the invention share a plurality of preferred embodiments. Insofar regarding the preferred embodiments and the advantages reference is made to the above discussion of the preferred embodiments and advantages of the first aspect of the invention. Preferably the vehicle is a road vehicle in particular a passenger car or a truck.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form of a detail shown and described herein, nor to anything less than the whole of the invention disclosed herein and as claimed as herein after. Further, the features described in the description, the drawings and the claims disclosing the invention may be essential for the invention considered alone or in combination. In particular, any reference sign in the claims shall not be considered as limiting the scope of the invention. The wording "comprising" does not exclude other elements or steps. The wording "a" or "an" does not exclude a plurality. The wording, "a number of" items, comprises also the number of one, i.e. a single item, and further numbers like two, three, four and so forth.

In the accompanying drawings:
- Figure 1: shows a schematic full sectional view of a compressor according to a preferred embodiment of the invention;
- Figure 2: shows a more detailed full sectional view of a second preferred embodiment of the invention; and
- Figure 3: illustrates a vacuum brake booster connected to a compressor of the present invention, which functions as a vacuum pump.

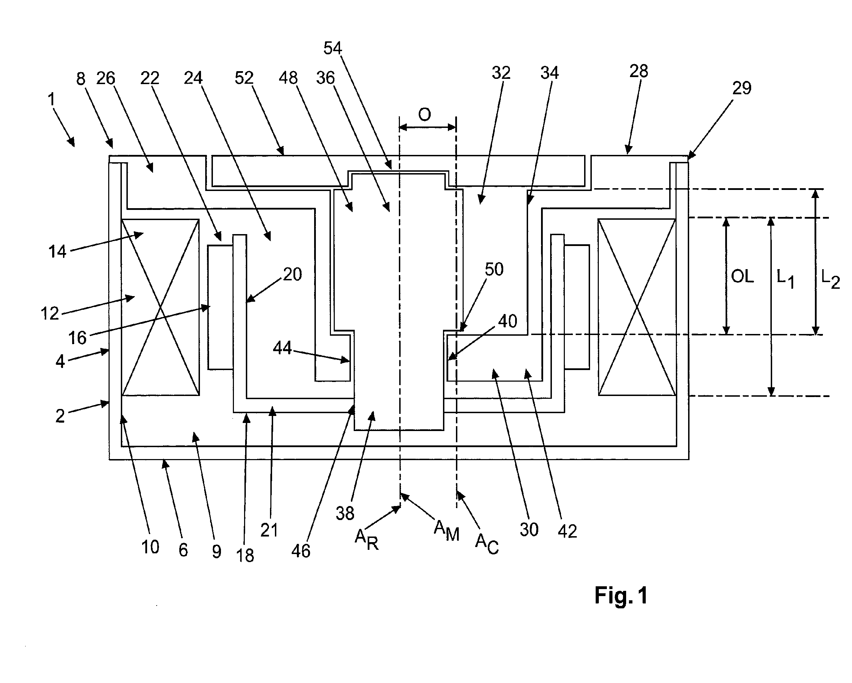

In Figure 1 a compressor in the form of a vacuum pump 1 is shown. The vacuum pump 1 comprises a housing 2, which substantially encloses the vacuum pump 1 and by means of which the vacuum pump 1 may be mounted at a desired place, for example in the region of an engine of a road vehicle. The housing 2 comprises a substantially ring shaped side wall 4 having a back wall 6 and a front opening 8. An electric drive motor 9 is provided within the housing 2. At a radially inner portion 10 of the ring shaped side wall 4 of the housing 2, an electric stator 12 belonging to the electric drive motor 9 is mounted. The electric stator 12 comprises a stator winding 14 which, in this case, is only shown schematically. The stator 12 is generally in a ring shaped form and extends over an axial length L₁ of a rotational axis A_{M} of the electric drive motor 9. The electric drive motor 9 further comprises an electric rotor 16, which is rotatable about the axis A_{M} and arranged radially inside the electric stator 12. The electric rotor 16 comprises a substantially cup shaped body 18, the body 18 having a substantially ring shaped side wall 20 and a substantially flat bottom wall 21, wherein on the sidewall 20 a plurality of permanent magnets 22 is provided. When the stator winding 14 of the electric stator is provided with a stator current, a magnetic field is induced inside the stator 12 and the electric rotor 16 is forced into rotation about axis A_{M}.

Since the electric rotor 16 is a substantially cup shaped form, and having the substantially ring shaped wall 20, a cavity 24 is provided radially inside the electric rotor 16. Therefore, one can call the electric motor 9 a hollow motor, or an inside-out outrunner electric motor.

The vacuum pump 1 furthermore comprises a chamber casing 26 which is fixed via a mounting portion 28 against a corresponding mounting portion 29 of the housing 2. The casing 26 may be fixed to the housing 2 by known fixing means, such as screw and screw threaded bores, clamping or clipping means or the like. The casing 26 comprises a cup shaped portion 30 extending from the opening 8 of the housing 2 in an axial direction along axis A_{M} into the electric motor 9 and intersects the rotor 16 substantially. Radially inside of the cup shaped portion 30 of the casing 26 a working chamber 32 of the vacuum pump 1 is defined. Therefore, the working chamber 32 is substantially arranged radially inside the electric motor 9, in particular inside the electric rotor 16. The working chamber 32 comprises a radial side wall 34, which is substantially cylindrical shaped, even though this is not mandatory. It should be understood that the working chamber may have a cross section which is not circular, but e.g. formed according to an ellipsoid, a cardioid or any other epicycloid form. The working chamber 32 comprises a central axis A_{c}, which is parallel to the rotational axis A_{M} of the electric motor 9, however offset to this axis A_{M} by an offset O. The working chamber 32 extends over an axial length L₂ of the axis A_{C} and A_{M}, respectively. As can be seen in Figure 1, the axial length L₁ of the electric motor 9 and the axial length L₂ of the working chamber 32 are nearly congruent to each other, beside a small offset, caused by mechanical constrains of vacuum pump 1. Due to this arrangement, the overall axial length is reduced at least by the amount of overlap O_{L} of the electric motor 9 and the working chamber 32 in the axial direction. Therefore, the axial dimensions of the vacuum pump 1 according to this embodiment are substantially reduced when compared to known vacuum pumps, in which usually the electric drive motor is arranged axially adjacent to the working chamber.

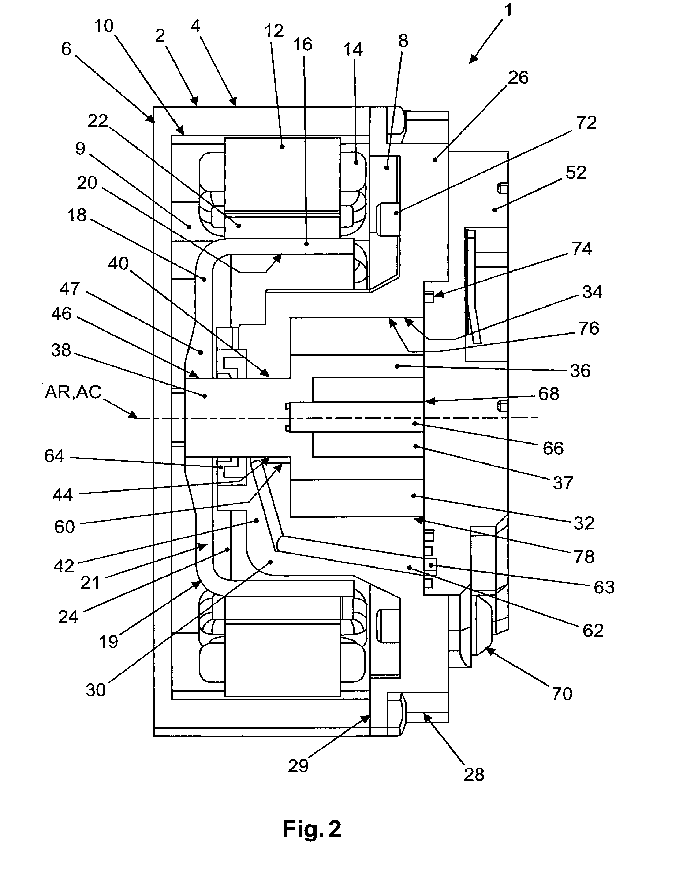

Furthermore, a compressor rotor 36 is provided in the working chamber 32. The compressor rotor 36 comprises a rotational axis A_{R} which is identical to the rotation axis A_{M} of the electric motor 9. The compressor rotor 36 comprises a shaft 38 extending through an opening 40 in a bottom portion 42 of the cup shaped portion 30 of the casing 26. In the area of the opening 40 a bearing 44 is provided in the form of a sleeve bearing (see also Figure 2). At an outside portion of the cup shaped portion 30 the shaft 38 engages an engagement portion 46. According to the embodiment shown in Figure 1, the engagement portion 46 is formed by an opening in a bottom wall 21 of the cup shaped rotor body 18. The bottom wall 21 according to this embodiment connects the ring shaped side wall portion 20 of the electric rotor 16 with the engagement portion 46 for engaging the electric rotor 16 to the compressor rotor 36. According to this embodiment, the side wall 20 and the bottom wall 21 are formed as a one-piece by means of a deep-drawing process. However, in alternative embodiments, the side wall 20 and the bottom wall 21 are separate pieces, mounted together. The bottom wall 21 may be for example formed as a strut or struts connecting the ring shaped portion 20 of the rotor body 18 to the compressor rotor 36. By means of the engagement portion 46, according to this embodiment, the electric rotor 16 is mounted to the shaft 38 by means of a press fit.

As can be seen in Figure 1, the engagement point between the bottom wall 21 and the shaft 38 is substantially arranged adjacent to the electric motor 9 in an axial direction, thus, not inside the electric motor 9. However, the ring shaped side wall 20 is supported by the bottom wall 21 so that it extends into the electric motor 9 for holding the magnets 22 in place. Thus, the electric rotor 16 extends over the working chamber 32 and thus over the casing 26, defining in it's inside the working chamber 32. Since the casing 26, in particular the cup shaped portion 30 of the casing 26 is not arranged symmetrically inside the electric motor 9, but offsets by the offset O, it is preferred that the casing 26 is formed out of a non-ferromagnetic material, such as aluminum. According to this embodiment, the casing 26 is formed out of aluminium. The sleeve bearing 44 preferably is formed also out of a non-ferromagnetic material, for example copper or brass. The rotor 16 and also the housing 2 may be formed out of a ferromagnetic material, such as steel. Also the compressor rotor 36 may be formed out of steel, since it is engaged to the electric rotor 18, rotating at the same rotational speed and also is being arranged in a rotational symmetrical way inside the electric motor 9.

The compressor rotor 36 moreover comprises a portion 48 with an enlarged diameter forming an abutment 50 at the transition portion to the shaft 38, for abutting at an inside portion of the bottom wall 42 of the cup shaped portion 30. Due to this arrangement, a beneficial sealing of the compressor rotor 36 is provided. The shaft 38 and the enlarged diameter portion 48 can be formed as a one-piece so that the compressor rotor 36 is formed as a one-piece in whole. The enlarged diameter portion 48 carries a movable impeller member, such as a vane (see also Figure 2) for rotation inside the working chamber 32.

The working chamber 32 is closed by means of a cover 52, mounted against the casing 26. The cover 52 is formed as a substantially flat plate, and may be mounted against the casing 26 by means of screws and corresponding screw threaded bores in the casing 26. Alternatives for mounting the cover 52 to the casing 26 are known. The cover 52 according to this embodiment comprises a recess 54 receiving a portion of the shaft 38, which extends from the enlarged diameter portion 48 of the compressor rotor 36, opposite the bearing 44. In the recess 54 an additional sleeve bearing is provided, so that the compressor rotor 36 is received in two opposite arranged bearings. The cover 52 is preferably formed out of the same material as the casing 26, in this case aluminium.

Now, turning to Figure 2, a more detailed embodiment of a vacuum pump 1 according to the invention is shown. The vacuum pump 1 according to Figure 2 has substantially the same design as the vacuum pump 1 according to Figure 1, and similar and identical parts are shown with the same reference signs as used above. Insofar, reference is also made to the above description with respect to Figure 1 and in the following the focus of the description will be on the differences between Figure 1 and Figure 2.

According to Figure 2, the vacuum pump 1 again comprises a housing 2 having a radial side wall 4 and a back wall 6. Inside the housing 2 an electric motor 9 is provided in the form of a brushless DC motor, having a stator 12 comprising a stator winding 14 and a rotor 16 carrying on its body 18 permanent magnets 22. The rotor 16 is arranged radially inside the electric stator 12 and defines a cavity 24 radially inside the electric rotor 16. The electric rotor 16 is again substantially cup shaped having a bottom wall 21 and a substantially ring shaped side wall 20. According to this embodiment (Figure 2), the rotor 16 is solid and the rotor body 18 having the ring shaped side wall 20 and the bottom wall 21 is formed as one-piece by means of a deep-drawing. Therefore, the side wall 20 and the bottom wall 21 are connected to each other by a curved portion 19, providing a smooth transition between the radial extending bottom wall 21 and the circumferentially arranged side wall 20. At the engagement portion 46 of the electric rotor 16 and the shaft 38 of the compressor rotor 36, the bottom wall 18 comprises a portion 47 with enlarged wall thickness, for providing a solid press fit between the electric rotor 16 and the compressor rotor 36.

In accordance with the first embodiment (Figure 1) also vacuum pump 1 of the second embodiment 2 comprises a casing 26 having a cup shaped portion 30 and defining a working chamber 32, which is substantially arranged inside the cavity 24. The bottom wall 42 of the cup shaped portion 30 according to this embodiment again comprises an opening 40 providing a sleeve bearing 44 for the shaft 38. The sleeve bearing 44 according to this embodiment comprises an oil gallery 60, connected with an oil supply conduit 62, which is formed in the casing 26 and connected to a source of oil 63. By means of this conduit 62, the oil gallery 60 is provided with constant flow of oil, which also may flow to a certain extent into the working chamber 32 for lubricating the compressor rotor 36 and in particular a moving member, which rotates inside the working chamber 32. At a distal portion of the opening 40, with respect to the working chamber 32, a sealing element 64 is provided around the shaft 38 for sealing the sleeve bearing 44 and the working chamber 32 against the environment, in particular against the electric motor 9 so that no oil flows from the sleeve bearing 44 into the electric motor 9.

The movable member in this embodiment is formed as a mono-vane 66. The mono-vane 66 is provided in a slot 68 formed in the rotor 36, which in this embodiment is formed as a hollow rotor defining an inner cavity 37. The vane 66 can move relative to the rotor 36 in a radial direction of the rotor 36, thus, longitudinal in the vane direction 66. The vane 66 is in contact always with two opposing points of the inner wall 34 of the working chamber 32. Oil, which flows from the sleeve bearing 44 into the working chamber 32 also serves for sealing the vane 66 against the wall 34 and providing a smooth operation of the vacuum pump 1.

The cover 52 is also in this embodiment formed out of aluminium, as well as the casing 26. The cover 52 is mounted against the casing 26 by means of screws 70, 72, from which only two can be seen in Figure 2. The cover 52 comprises a ring shaped recess 74, which runs around the working chamber 32. The recess 74 can receive a sealing element, such as an O-ring or the like, so that the cover 52 can seal against the casing 26 in a fluid-tight manner.

As can be seen in Figure 2, the inlet 78 of the working chamber 32 is provided proximal to the cover 52, but actually outside the electric motor 9. The corresponding outlet 76 is provided in opposite side of the inlet 78, also proximal to the cover 52.

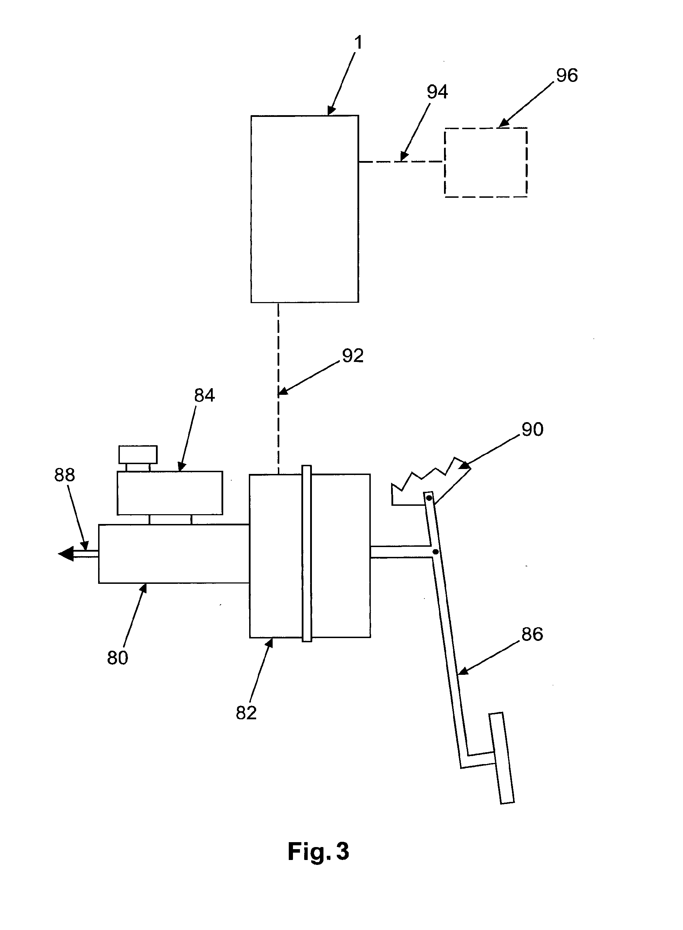

Figure 3 illustrates schematically a typical installation of the invention with respect to a vehicle hydraulic brake circuit, including the usual brake master cylinder 80, vacuum booster 82, fluid reservoir 84 and a brake pedal 86. The hydraulic output of the master cylinder 80 is represented by the arrow 88 and the vehicle structure is schematically shown with reference sign 90.

The compressor 1 formed as a vacuum pump is connected to the vacuum chamber of the booster 82 via a vacuum duct 92. The vacuum pump 1 therefore provides a vacuum via the vacuum duct 92 to the vacuum chamber of the booster, when required. The compressor 1 is furthermore connected via a signal line 94 to the electrical system 96 of the vehicle (the electrical systems only show by means of a dashed square in figure 3). Via the signal line 94 the compressor receives electrical energy and also signals, so that the compressor 1 may only be switched on, when required. This helps to save energy or fuel and reduces unnecessary running time of the compressor 1.

### LIST OF REFERENCE SIGNS

- 1: vacuum pump
- 2: housing
- 4: side wall
- 6: back wall
- 8: front opening
- 9: electric drive motor
- 10: inner portion
- 12: electric stator
- 14: stator winding
- 16: electric rotor
- 18: cup shaped body of rotor
- 19: curved portion
- 20: ring shaped side wall
- 21: bottom wall
- 22: permanent magnets
- 24: cavity
- 26: chamber casing
- 28: mounting portion
- 29: mounting portion
- 30: cup shaped portion
- 32: working chamber
- 34: radial side wall
- 36: compressor rotor
- 38: shaft
- 40: opening
- 44: sleeve bearing
- 46: engagement portion of compressor rotor
- 48: enlarged diameter portion of compressor rotor
- 50: abutment of compressor rotor
- 52: cover
- 54: recess in cover
- 60: oil gallery
- 62: oil supply conduit
- 63: source of oil
- 64: sealing element
- 66: vane
- 68: slot
- 70: screws
- 72: screws
- 74: recess
- 76: outlet
- 78: inlet
- 80: brake master cylinder
- 82: vacuum booster
- 84: fluid reservoir
- 86: brake pedal
- 88: hydraulic output of the master cylinder
- 90: vehicle structure
- 92: vacuum duct
- 94: signal line
- 96: electrical system
- A_{M}: rotational axis motor
- A_{C}: central axis
- A_{R}: rotational axis rotor
- O: offset
- O_{L}: overlap
- L₁: axial length
- L₂: axial length

## Claims

1. An electrically driven positive displacement compressor, in particular vacuum pump (1), comprising
an electric drive motor (9) for driving the compressor,
a working chamber (32) having an inlet (78) and an outlet (76),
wherein the electric drive motor (9) comprises a ring shaped electric stator (12) and an electric rotor (16) arranged inside the ring shaped electric stator (12) and defining a cavity (24) within the electric rotor (16), and wherein the working chamber (32) is arranged at least partially inside the cavity (24) of the electric rotor (16),
**characterized by** a compressor rotor (36) arranged inside the working chamber (32) and coupled to the electric rotor (16).

2. Compressor according to claim 1,
wherein the electric drive motor (9) is a brushless motor.

3. Compressor according to claim 1 or 2,
comprising a chamber casing (26), defining in its inside the working chamber (32), wherein the chamber casing (26) is arranged at least partially inside the ring shaped electric rotor (16).

4. Compressor according to claim 3,
wherein the chamber casing (26) is formed out of a non-ferromagnetic material, in particular aluminium.

5. Compressor according to any of the above claims,
wherein the compressor rotor (36) engages at least one vane (66) inside the working chamber (32) for rotating the at least one vane (66) to draw fluid into the working chamber (32) through the inlet (78) and out of the working chamber (32) through the outlet (76).

6. Compressor according to claim 5,
wherein the vane (66) is formed as a single mono vane being slidable provided in a slot (68) formed in the compressor rotor (36).

7. Compressor according to any of the above claims,
wherein the working chamber (32) comprises a central axis (A_{C}) and the electric rotor (16) comprises a rotational axis (A_{M}), wherein the central axis (Ac) of the working chamber (32) is offset (O) to the rotational axis (A_{M}) of the electric rotor (16).

8. Compressor according to any of the above claims,
wherein a rotational axis (A_{R}) of the compressor rotor (36) is arranged coaxial to a rotational axis (A_{M}) of the electric rotor (16).

9. Compressor according to any of the above claims,
wherein the compressor rotor (36) and the electric rotor (16) are fixedly connected to each other.

10. Compressor according to any of the above claims,
wherein the electric rotor (16) is substantially in the form of a cup having a radial ring shaped side wall (20) and a bottom wall (21) extending radially from the side wall (20) towards the rotational axis (A_{M}) for engaging the compressor rotor (36).

11. Compressor according to any of the above claims,
wherein the compressor rotor (36) comprises a shaft (38), the shaft (38) being received in at least one bearing (44) formed in the chamber casing (26) and extending there through for engaging the electric rotor (16).

12. Compressor according to claims 3 or 4,
comprising a housing (2) for housing the drive motor (9) and the chamber casing (26), wherein the chamber casing (26) is mounted to the housing (2).

13. Compressor according to any of the above claims, wherein the electric stator (12) comprises a stator winding (14) and the electric rotor (16) comprises a plurality of permanent magnets (22).

14. Compressor according to one of the claims 1 to 13, wherein the compressor is executed as a vacuum pump to generate a vacuum pressure for a braking system of a vehicle.

15. Vehicle comprising a compressor (1) according to one of the claims 1 to 14.
